# EUROPEAN PATENT APPLICATION

(11) **EP 4 446 383 A1**
(43) Date of publication of application: **16.10.2024**
(21) Application number: 23167551.3
(22) Date of filing: 12.04.2023
(51) Int. Cl.: C08L 81/02, C08L 79/00, C08L 81/06, C08L 83/00

(54) **FLAME-RETARDANT PPS-BASED COMPOSITION AND MOLDED ARTICLE USING THE SAME**

(71) Applicant: Solvay Specialty Polymers USA, LLC, Alpharetta, Georgia 30005-3914 (US)
(72) Inventor: SANSEAU, Olivier, 69190 Saint-Fons (FR)
(74) Representative: Ferri, Isabella

(57) **Abstract**

A flame-retardant PPS-based composition comprising: A) of at least one polyphenylene sulfide polymer; B) at least one polyphenylsulfone polymer, C) at least one thermoplastic elastomer containing epoxy functional groups, and D) an epoxy-modified polysiloxane. The PPS-based composition has a V-0 rating using UL 94 V (2013) standard (0.8 mm thickness). An article comprising or made from such a flame-retardant PPS-based composition. Use of the article as a component of an electric vehicle. A method of cooling a battery and/or operating a battery comprising passing a heat transfer fluid in a flame-retardant heat transfer tube comprising or made from the flame-retardant PPS-based composition.

## Description

### Cross-Reference to Related Applications

Not applicable.

### Technical Field

The invention generally relates to a flame-retardant PPS-based composition, its use in making flame-retardant molded articles, particularly extrusion molded articles, overmolded components and thin-walled molded articles, which may be suitably used for automotive components and thermal management systems, in particular components and systems used in an electric vehicle.

### Background Art

In many applications, plastics are key materials in driving forward electric mobility. Due to their functional integration and lightweight properties, plastics provide many benefits to automotive engineers solving technical challenges that can hardly be met with metals.

Since an electric powertrain raises different hazards than a combustion powertrain, this challenges plastics with new property requirements. In particular there is a demand for a higher safety against electric malfunctions, which can cause the risk of an electric shock, the occurrence of electric arcs, and other potential sources of ignition. Since plastics are mainly combustible materials, special precautions have to be taken to increase electric vehicle safety and to prevent the ultimate worst-case scenario of a battery cell fire, a so-called thermal runaway.

Batteries have to supply ever greater instantaneous powers and have a high storage capacity. Batteries having operating voltages of several hundred volts are nowadays known. To achieve the desired voltages and currents, it is conventional to connect a plurality of individual battery cells together in parallel and/or in series.

While advancements have been made in electric vehicle batteries that allow them to deliver more power and require less frequent charges, one of the biggest challenges for battery safety is the ability to design an effective cooling system.

For a typical Li-ion battery a temperature above 80°C, even only in a part of its structure, can start exothermal chemical reactions which cause a further temperature increase of the battery, ultimately leading to a complete collapse of the battery with risk of fire and explosion.

For this reason it is nowadays standard to integrate a Battery Thermal management System (BTMS) within commercial battery assemblies, especially when safety, reliability and lifetime of the battery are a significant concern. These BTMSs can be more or less complex, depending on the type of battery, however one common element is the presence of a heat transfer fluid which exchanges heat with the battery thus heating or cooling it.

Several heat transfer systems exist for the thermal management of batteries, such as air cooling, liquid cooling, and direct refrigerant cooling. Among these, liquid cooling is the most commonly used system due to its convenient design and good heat transfer performance.

The use of water, or water/ethylene glycol mixtures, is widespread as heat transfer medium, since this type of heat transfer system is already common in vehicles with conventional drives, i.e. with internal combustion engines. A safety-critical drawback of the use of this water based heat transfer medium is the electrical conductivity thereof. In the event of the heat transfer circuit leaking, for example as a result of an accident, the escaping water or water/ethylene glycol mixture can cause short circuits. As a result fires and other emergency situations can be caused, and this can in turn lead to additional and sometimes considerable damage to the vehicle. In order to reduce this risk, the components of the thermal management system should possess high flame retardant properties. That is why flame-retardant polymer compounds are sought in eMobility applications.

One conventional manner to identify flame retardancy in plastic materials refers to standard tests developed by Underwriters Laboratory (USA), referred to as UL 94 V (vertical burning test) Standard for Safety of Flammability of Plastic Materials for Parts in Devices and Appliances testing. Preferably components of the thermal management system for use in batteries in electric vehicles should comply with standard V-0 rating, which identifies plastic materials for which "burning stops within 10 seconds on a vertical part allowing for drops of plastic that are not inflames".

Polyphenylene sulfide (hereinafter sometimes abbreviated as "PPS") resin is an engineering plastic having well-balanced properties such as heat resistance, chemical resistance and flame retardancy. A PPS resin is therefore a good polymer candidate for use in components of eV batteries, such as in a thermal management system for use in an eV battery

In addition, due to its cost advantage over other engineering plastics, PPS resin is used in a wide range of applications such as automotive applications, housing equipment applications, electrical and electronic applications, as a highly versatile resin material.

However PPS resin is brittle and the toughness represented by tensile elongation at break in a tensile test of a PPS resin is low compared to other engineering polymers.

For applications requiring toughness, as described in JPS6121156A**,** a PPS resin composition containing an alpha-olefin-glycidyl methacrylate copolymer was developed. In this composition, by blending an olefin-based elastomer, which is a softer material than the PPS resin, improvement in toughness as well as flexibility can be realized.

However, the flame retardancy of such a resin composition comprising a PPS resin and an olefin-based elastomer described in JPS6121156A was evaluated in WO2022209848A1**.** It was observed that the flame retardancy of the resin composition was lower than that of the PPS resin alone, and that the flame retardancy was significantly reduced when the olefin-based elastomer was added to PPS. In WO2022209848A1 it was hypothesized that while the PPS resin alone has high flame retardancy, the blending of the olefin-based elastomer, which has an significantly inferior flame retardancy, reduces the flame retardancy of the resulting blended composition. While this blended composition has the advantage of having flexibility and toughness, it does not exhibit the excellent flame retardancy that PPS resins inherently possess, and thus has the problem of limited application development.

Such observation was confirmed by the applicant in the context of making cooling tubes from toughened PPS compositions. A PPS formulated with a thermoplastic elastomer ("TPE") reached sufficient toughness and viscosity allowing tube extrusion and thermoforming. But the introduction of 10 wt% TPE into PPS led to a material with poor flame resistance. For example, the toughened PPS material was not V-0 (using UL 94 V (2013): Vertical Burning Test, measured on a piece having of thickness of 1.6 mm). Due to the low TPE content, the toughened PPS material (PPS+TPE) had poor ductility with a deformation at break of only around 13%.

Therefore, there is a continued need in the art for a flame-retardant PPS composition suitable to make articles intended to be used in systems that are prone to fire risk, such as components in eV batteries for use in electric vehicles ("eV") and particularly in eV battery's thermal management systems. The article should have the highest flame retardant rating V-0 according to UL 94 V (2013) (0.8 mm thickness) and, at the same time, the required mechanical properties to withstand solicitations during use.

### Summary of invention

The invention is as disclosed below and in the appended claims.

A first object of the invention is a polyphenylsulfide-based composition comprising:
- (A) from 45 to 75 wt% of at least one polyphenylsulfide (PPS) polymer,
- (B) from 20 to 45 wt% of at least one polyphenylsulfone (PPSU) polymer,
- (C) from 4.5 to 12 wt% of at least one thermoplastic elastomer containing epoxy functional groups (TPE), and
- (D) from 0.5 to 5 wt% of at least one epoxy-modified polysiloxane ("pSiO"),
said wt% being based on the total weight of the PPS-based composition, wherein the combined contents of components (A), (B), (C) and (D) is 100 wt% or less based on the total weight of the PPS-based composition.

The inventive polyphenylsulfide-based composition is a flame retardant material with the highest flame retardant rating V-0 according to UL 94 V (2013) measured on a test piece having a thickness of 1.0 mm or less, preferably a thickness of 0.8 mm.

A second object of the invention is the use of the flame-retardant PPS-based composition according to the first object to make a flame-retardant article, meaning an article having a V-0 rating, wherein the flame retardancy rating of V-0 is measured in a test piece having a thickness of 1.0 mm or less, preferably a thickness of 0.8 mm, according to the UL 94 V (2013), vertical burning test standard.

A third object of the invention is an article comprising or made from the flame-retardant PPS-based composition according to the first object. The article has a V-0 rating, wherein the flame retardancy rating of V-0 is measured in a test piece having a thickness of 1.0 mm or less, preferably a thickness of 0.8 mm, according to UL 94 V (2013). The article may be a component (e.g. heat transfer tube, magnet wire, busbar, bobbin, slot liner, slot wedge, power module, etc) for an automotive device, such as for an electric vehicle (eV) and/or for a management system thermal, in particular components used in eV batteries, electric motors or generators and/or in a management system thermal of an eV battery.

A fourth object of the invention is a method for improving the flame retardancy rating of a V-1 rated PPS composition comprising at least one polyphenylsulfide, at least one polyphenylsulfone, and at least one thermoplastic elastomer containing epoxy functional groups, such method comprising adding an epoxy-modified polysiloxane to the V-1 rated PPS composition so as to obtain the V-0 rated PPS-based composition of the present invention, wherein the V-0 and V-1 flame retardancy ratings are measured according to UL 94 V (2013) on a test piece having a thickness of 1.0 mm or less, preferably a thickness of 0.8 mm.

It has now been found that certain PPS-based compositions comprising at least one polyphenylsulfide, at least one polyphenylsulfone, at least one thermoplastic elastomer containing epoxy functional groups, and at least one epoxy-modified polysiloxane can be used to make articles meeting the flame retardancy rating of V-0 measured in a test piece having a thickness of 1.0 mm or less, preferably a thickness of 0.8 mm, according to UL 94 V (2013). The flame-retardant articles are preferably extruded molded components / parts and/or thin-wall molded components / parts intended to be used in electric vehicles. The flame-retardant articles are particularly useful as components (e.g., tubular members such as heat transfer tubes, coated wires/cables such as magnet wires, busbars such as electrical busbars, bobbins such as coil bobbins, slot liners, slot wedges, power modules, etc) for automotive and thermal management systems, in particular, in eV batteries, electric motors or generators and/or in a thermal management system of an eV battery.

The various aspects, advantages, and features of the invention will be more readily understood and appreciated by reference to the detailed description and examples.

### Definitions

In the following specification and the claims, which follow, reference will be made to a number of terms, which shall be defined to have the following meanings:
- the terms "a", "an", or "the" means "one or more" or "at least one" and may be used interchangeably, unless otherwise stated;
- the term "and/or" used in a phrase in the form of "A and/or B" means A alone, B alone, or A and B together;
- any description, even though described in relation to a specific embodiment, is applicable to and interchangeable with other embodiments of the present disclosure, and each embodiment thus defined may be combined with another embodiment, unless otherwise indicated or clearly incompatible;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list;
- any recitation herein of numerical ranges by endpoints includes all numbers subsumed within the recited ranges as well as the endpoints of the range and equivalents;
- the term "comprising" (or "comprise") includes "consisting essentially of" (or "consist essentially of") and also "consisting of" (or "consist of');
- as used herein, the term *"comprises"* is synonymous with "including," "containing," or "characterized by," is intended to be inclusive or open-ended and does not exclude additional, unrecited elements or steps;
- as used herein, the term "consisting essentially of" is inclusive of the specified materials or steps and those that do not materially affect the basic characteristic or function of the composition, process, method, or article of manufacture described;
- as used herein, the term "consisting of" excludes any element, step, or component not specified;
- the term "consisting essentially of" or "consists essentially" in relation to a composition, article, component, process, or method is intended to mean that any additional element, step or feature which may not be explicitly described herein and which does not materially affect the basic and novel characteristics of such a composition, article, component, process, or method can be included in such an embodiment; generally "consists essentially" with respect to a composition of the present invention means that the content of component(s) not explicitly provided in the description is less than 1 wt.%, or less 0.5 wt.%, or less than 0.1 wt.%, or less than 0.05 wt.%, or even less than 0.01 wt.%, said wt% based on the total weight of the PPS-based composition;
- approximating language, as used herein throughout the description and claims, may be applied to modify any quantitative representation that could permissibly vary without resulting in a change in the basic function to which it is related; accordingly, a value modified by a term or terms, such as "about" and "substantially", are not to be limited to the precise value specified. In at least some instances, the approximating language may correspond to the precision of an instrument for measuring the value;
- the term "optional" or "optionally" means that the subsequently described component or method step or circumstance may or may not occur, and that the description includes instances where the component or method step or circumstance occurs and instances where it does not;
- throughout the specification and claims, range limitations may be combined and/or interchanged, such ranges are identified and include all the sub-ranges contained therein unless context or language indicates otherwise;
- it should be understood that the elements, properties and/or the characteristics of a polymer, composition, product or article, a process, method or a use, described in the present specification, may be combined in all possible ways with the other elements, properties and/or characteristics of the polymer, composition, product or article, process, method or use, explicitly or implicitly, this being done without departing from the scope of the present description;
- the term "recurring unit" designates the smallest unit of a polymer which is repeating in the chain. The term "recurring unit" is synonymous to the terms "repeating unit" and "structural unit"; and
- the proportions of recurring units in the polymer are given in mol.% relative to the total amount of moles of recurring units in the polymer.

### Detailed Description of the invention

**The flame-retardant PPS-based composition**

The flame-retardant PPS-based composition comprises:
- (A) from 45 to 75 wt% of at least one PPS polymer,
- (B) from 20 to 45 wt% of at least one PPSU polymer,
- (C) from 4.5 to 12 wt% of at least one TPE, and
- (D) from 0.5 to 5 wt% of at least one epoxy-modified polysiloxane,
said wt% being based on the total weight of the PPS-based composition, wherein the combined contents of components (A), (B), (C) and (D) is 100 wt% or less based on the total weight of the PPS-based composition.

Preferably, the flame-retardant PPS-based composition comprises:
- (A) from 47 to 70 wt% of at least one PPS polymer,
- (B) from 22 to 43 wt% of at least one PPSU polymer,
- (C) from 5 to 11 wt% of at least one TPE, and
- (D) from 0.6 to 4 wt% of at least one epoxy-modified polysiloxane,
said wt% being based on the total weight of the PPS-based composition, wherein the combined contents of components (A), (B), (C) and (D) is 100 wt% or less based on the total weight of the PPS-based composition.

More preferably, the flame-retardant PPS-based composition comprises:
- (A) from 50 to 65 wt% of at least one PPS polymer,
- (B) from 23 to 40 wt% of at least one PPSU polymer,
- (C) from 6 to 10 wt% of at least one TPE, and
- (D) from 0.7 to 3 wt% of at least one epoxy-modified polysiloxane,
said wt% being based on the total weight of the PPS-based composition, wherein the combined contents of components (A), (B), (C) and (D) is 100 wt% or less based on the total weight of the PPS-based composition.

Yet more preferably, the flame-retardant PPS-based composition comprises:
- (A) from 50 to 65 wt% of at least one PPS polymer,
- (B) from 27 to 38 wt% of at least one PPSU polymer,
- (C) from 7 to 10 wt% of at least one TPE, and
- (D) from 1 to 2 wt% of at least one epoxy-modified polysiloxane,
said wt% being based on the total weight of the PPS-based composition, wherein the combined contents of components (A), (B), (C) and (D) is 100 wt% or less based on the total weight of the PPS-based composition.

Yet even more preferably, the flame-retardant PPS-based composition consists of:
- (A) from 45 to 75 wt%, or from 47 to 70 wt%, or from 50 to 65 wt%, or from 50 to 65 wt%, of at least one PPS polymer,
- (B) from 20 to 45 wt%, or from 22 to 43 wt%, or from 23 to 40 wt%, or from 27 to 38 wt%, of at least one PPSU polymer,
- (C) from 4.5 to 12 wt%, or from 5 to 11 wt%, or from 6 to 10 wt%, or from 7 to 10 wt%, of at least one TPE,
- (D) from 0.5 to 5 wt%, or from 0.6 to 4 wt%, or from 0.7 to 3 wt%, or from 1 to 2 wt%, of at least one epoxy-modified polysiloxane,
- optionally up to 10 wt% of at least one additive (E), and
- optionally less than 15 wt% of at least another resin (F) different than the components (A), (B), (C), (D) and (E),
said wt% being based on the total weight of the PPS-based composition, wherein the combined contents of components (A), (B), (C), (D), (E) and (F) is 100 wt% based on the total weight of the PPS-based composition.

The PPS-based composition of the present invention has a flame retardancy of V-0 measured on a test piece having a thickness of 1.0 mm or less, preferably having a thickness of 0.8 mm, according to UL 94 V (2013), Vertical Burning Test.

The inventive PPS-based composition is preferably halogen-free, meaning that no halogen-containing components are used in the PPS-based composition.

The flame-retardant PPS-based composition of the present invention preferably does not contain a phosphorus-based flame retardant agent, a halogen-based flame retardant agent, an inorganic flame retardant agent, or any combination thereof.

The inventive PPS-based composition more preferably does not contain any flame retardant agents.

The components (C) and (D) and optional components (E) and (F) in the inventive PPS-based composition are not flame retardant agents.

While the inventive PPS-based composition may contain a polymer (F) distinct from the components (A), (B), (C), (D) and (E), it is preferred that the inventive PPS-based composition does not contain another polymer distinct from the components (A), (B), (C), (D) and (E).

In particular, the inventive PPS-based composition preferably excludes a poly(ether imide) ("PEI") polymer; the expressions "poly(ether imide)" and/or "polymer (PEI)" denote a polymer comprising at least 50 mol.%, based on the total number of moles in the polymer, of recurring units (R_{PEI}) comprising at least one aromatic ring, at least one imide group, as such and/or in its amic acid form, and at least one ether group. Recurring units (R_{PEI}) may optionally further comprise at least one amide group which is not included in the amic acid form of an imide group.

In addition to having flame retardant V-0 rating, the PPS-based composition preferably exhibits deformation at break greater than 30 % (measured at room temperature (23°C) according to ISO 527-2).

It was observed that when considering a base composition containing the PPS polymer, the PPSU polymer and the TPE (without pSiO), the addition of the epoxy-modified polysiloxane does not negatively impact the deformation at break of the resulting PPS-based composition.

### Component (A): The polyphenylene sulfide (PPS) polymer

The PPS-based composition comprises at least one polyphenylene sulfide polymer, referred to as "PPS" or "PPS polymer" throughout the specification.

In its broadest definition, the PPS polymer can be made of substituted and/or unsubstituted phenylene sulfide groups.

According to the present invention, a PPS polymer denotes any polymer comprising at least 50 mol% of recurring units (R_{PPS}) represented by formula (1) (mol% being based on the total number of moles of recurring units in the PPS polymer): 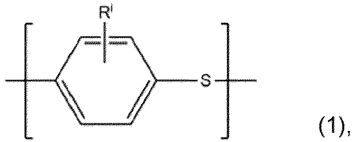 where R is independently selected from the group consisting of halogen, C1-C12 alkyl groups, C7-C24 alkylaryl groups, C7-C24 aralkyl groups, C6-C24

arylene groups, C1-C12 alkoxy groups, and C6-C18 aryloxy groups, and i is independently zero or an integer from 1 to 4.

According to formula (1), the aromatic ring of the recurring unit (R_{PPS}) may contain from 1 to 4 radical groups R. When i is zero, the corresponding aromatic ring does not contain any group R.

The PPS polymer is preferably any polymer comprising at least 50 mol% of recurring units (R_{PPS}) represented by formula (1'), that are recurring units of formula (1) in which i is zero:

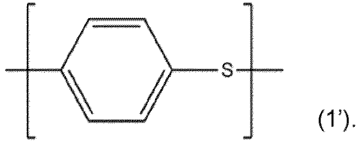

According to an embodiment of the present invention, the PPS polymer is such that at least 60 mol %, at least 70 mol %, at least 80 mol %, at least 90 mol %, at least 95 mol %, or at least 99 mol % of the recurring units in the PPS polymer are recurring units (R_{PPS}) represented by formula (1) or (1'). The mol% are based on the total number of moles of recurring units in the PPS polymer.

The PPS polymer may be acid washed or not acid washed. In some embodiments, the PPS polymer is an acetic acid washed PPS polymer.

According to an embodiment of the present invention, the PPS polymer is such that 100 mol % of the recurring units are recurring units (R_{PPS}) represented by formula (1) or (1'). According to this embodiment, the PPS polymer consists essentially of recurring units (R_{PPS}) represented by the formula (1').

Suitable PPS polymers are commercially available under the tradename Ryton^{®} PPS from Solvay Specialty Polymers USA, LLC. In the text of the application, a PPS product Ryton^{®} starting with the prefix 'QA' such as QA200N means an acid-washed PPS.

The melt flow rate (at 316°C under a weight of 5 kg according to ASTM D1238, procedure B) of the PPS may be from 50 to 400 g/10 min, for example from 60 to 300 g/10 min or from 70 to 200 g/10 min. For example, Ryton^{®} PPS QA 220N and QA 200N have a melt flow rate of 160 g/10 min, and 100 g/10 min, respectively. Ryton^{®} PPS QC 220N, QC 210N and QC 200N have a melt flow rate of 175 g/10 min, 135 g/10 min, and 100 g/10 min, respectively.

As used herein, the melt flow rate (MFR), also known as melt flow index (MFI), is used to characterize polymer melts. It is an indirect measure of molecular weight, meaning that high MFR corresponds to low molecular weight. At the same time, the melt flow rate is a measure of the ability of the material's melt to flow under pressure. The melt flow rate is inversely proportional to the viscosity of the polymer melt. If the MFI or MFR is low, then its melt viscosity and melt flow resistance is high.

The PPS-based composition comprises at least one PPS polymer in an amount of at least 45 wt%, at least 47 wt%, or at least 50 wt%, based on the total weight of the PPS-based composition.

The PPS-based composition comprises the at least one PPS polymer in an amount of at most 75 wt%, at most 70 wt%, at most 65 wt%, or at most 60 wt%, based on the total weight of the PPS-based composition.

Preferably, the PPS-based composition comprises the at least one PPS polymer in an amount ranging from 45 to 75 wt%, or from 50 to 65 wt%, based on the total weight of the PPS- based composition.

### Component (B): The polyphenylsulfone (PPSU) polymer

The PPS-based composition comprises at least one polyphenylsulfone (PPSU) polymer, hereinafter referred to as "PPSU" or "PPSU polymer".

As used herein, a PPSU polymer denotes any polymer comprising at least 50 mol% of recurring units (R_{PPSU}) represented by formula (2): 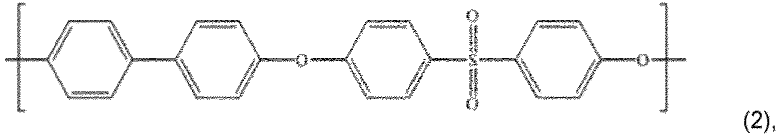 the mol% being based on the total number of moles of recurring units in the PPSU polymer.

According to an embodiment of the present disclosure, at least 60 mol % (based on the total number of moles of recurring units in the PPSU polymer), at least 70 mol%, at least 80 mol%, at least 90 mol%, at least 95 mol%, or at least 99 mol% or all of the recurring units in the PPSU polymer are recurring units (R_{PPSU}) represented by the formula (2).

A PPSU polymer can be prepared by known methods and is notably commercially available as RADEL^{®} PPSU from Solvay Specialty Polymers USA, L.L.C. Suitable PPSU polymers may be selected, but not limited to, Radel^{®} R-5500 NT, R-5700 NT, R-5800 NT and R-5900 NT.

The melt flow rate (at 365°C under a weight of 5 kg according to ASTM D1238) of the PPSU polymer may be from 5 to 40 g/10 min, for example from 5 to 35 g/10 min, from 10 to 40 g/10 min, from 10 to 30 g/10 min, from 12 to 40 g/10 min, from 20 to 40 g/10 min, or from 10 to 35 g/10 min. For example, Radel^{®} PPSU R-5500 NT, R-5700 NT, R-5800 NT and R-5900 NT have a melt flow rate of 12-17 g/10 min, 34-40 g/10 min, 20-28 g/10 min, and 26-36 g/10 min, respectively.

The PPS-based composition comprises at least one PPSU polymer in an amount of at least 20 wt%, for example at least 22 wt%, at least 25 wt%, at least 27 wt%, or at least 29 wt%, based on the total weight of the PPS-based composition.

The PPS-based composition comprises at least one PPSU polymer in an amount of at most 45 wt%, for example at most 43 wt%, at most 40 wt%, or at most 38 wt%, based on the total weight of the PPS-based composition.

The PPS-based composition comprises at least one PPSU polymer in an amount ranging from 20 to 45 wt%, for example from 22 to 43 wt%, from 25 to 40 wt%, or from 27 to 38 wt%, based on the total weight of the PPS-based composition.

### Component (C): The thermoplastic elastomer containing epoxy functional groups (TPE)

The PPS-based composition comprises at least one thermoplastic elastomer containing epoxy functional groups, referred herein as "TPE".

In the context of the present invention, an "elastomer" is defined as a polymeric material presenting: (1) a low glass transition temperature (Tg), that is to say a glass transition temperature below 25°C, even below 0°C, and (2) a low modulus (Young's Modulus), that is to say a modulus below 200 MPa or even below 100 MPa.

The expression "epoxy functional group" is hereby used according to its usual meaning, i.e., designating a functional group including an oxygen atom joined by single bonds to two adjacent carbon atoms, thus forming a three-membered epoxide ring.

The polymer backbone of the TPE can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylenevinylacetate (EVA); acrylonitrile-butadiene-styrene rubbers (ABS), block copolymers styrene ethylene butadiene styrene (SEBS); block copolymers styrene butadiene styrene (SBS); core shell elastomers of methacrylate-butadiene-styrene (MBS) type, or mixture of one or more of the above.

The TPE used in the PPS-based composition comprises epoxy functional groups. The functionalization of the backbone can result from the copolymerization of monomers which include epoxy functional groups or from the grafting of the polymer backbone with a further component comprising epoxy functional groups.

Specific examples of TPEs are notably poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymers as well as copolymers of styrene and glycidyl (meth)acrylates. Notable, non limiting, examples of commercially available TPEs suitable for the heat transfer tube of the invention, are for instance Lotader^{®} AX8900 and Lotader^{®} AX8840 from Arkema (Bristol, PA, USA) which are, respectively, a poly(ethylene-co-alkylacrylate-co-glycidyl acrylate) terpolymer (compirising structural units derived from 67 wt% ethylene, 25 wt% methylacrylate, and 8 wt% glycidyl methacrylate) and a poly(ethylene-co-glycidylmethacrylate) copolymer (comprising structural units derived from 92 wt% ethylene and 8 wt% glycidyl methacrylate) or Igetabond^{®} BF-E from Sumitomo Chemical also a poly(ethylene-co-glycidylmethacrylate) copolymer (comprising structural units derived from 88 wt% ethylene and 12 wt% glycidyl methacrylate). Another example of a suitable TPE is commercially available from Dow Inc. (Midland, MI, USA) under the trade name Paraloid^{™} EXL 2314, which is a core-shell type acrylate based polymer comprised of a core primarily comprised of cross-linked poly(n-butyl acrylate) rubber and of a shell comprised primarily of a poly(methyl methacrylate)-poly(glycidyl methacrylate) copolymer.

Particularly suitable TPE are selected from the group consisting of poly(ethylene-co-glycidylmethacrylate) copolymers, poly(ethylene-co-methyl(meth)acrylate-co-glycidyl acrylate) copolymers, poly(ethylene-co-n-butyl acrylate-co-glycidyl acrylate) copolymers and copolymers of styrene and glycidyl (meth)acrylates, preferably selected from poly(ethylene-co-glycidylmethacrylate) copolymers and/or poly(ethylene-co-methyl(meth)acrylate-co-glycidyl acrylate) copolymers; more preferably selected from poly(ethylene-co-glycidylmethacrylate) copolymers.

Advantageous results have been obtained with Igetabond^{®} BF-E from Sumitomo Chemical which is a poly(ethylene-co-glycidylmethacrylate) copolymer (comprising structural units derived from 88 wt% ethylene and 12 wt% glycidyl methacrylate).

The PPS-based composition preferably comprises a TPE which has a melt flow rate (ASTM D1238, 190°C with 2.16 kg load) of less than 10 g/10 min, for example less than 7 g/10 min, less than 6 g/10 min, less than 5 g/10 min, or less than 4 g/10 min.

The PPS-based composition comprises at least one TPE in an amount of at least 4.5 wt%, at least 5 wt%, at least 6 wt%, at least 7 wt%,or at least 8 wt%, based on the total weight of the PPS-based composition.

The PPS-based composition comprises at least one TPE in an amount of at most 12 wt%, at most 11.5 wt%, at most 11 wt%, at most 10.5 wt%, or at most 10 wt%, based on the total weight of the PPS-based composition.

The PPS-based composition preferably comprises at least one TPE in an amount ranging from 4.5 to 12 wt%, preferably from 5 to 11 wt%, from 6 to 10 wt% or from 7 to 10 wt%, based on the total weight of the PPS-based composition.

### Component (D): Epoxy-modified polysiloxane (pSiO)

The PPS-based composition comprises at least one epoxy-modified polysiloxane.

In the context of the present invention, a "polysiloxane" is defined as a silicone-based polymer compound containing siloxane oxygen-silicon bonds (Si-O-Si) in its main chain structure. Each Si atom in the siloxane bonds typically carries two organic groups, generally selected from alkyl, vinyl and/or phenyl groups. The two organic groups may be the same or different from one another.

The epoxy-modified polysiloxane (D) comprises at least one polysiloxane containing at least one epoxy functional group. The expression "epoxy functional group" is hereby used according to its usual meaning, i.e., designating a functional group including an oxygen atom joined by single bonds to two adjacent carbon atoms, thus forming a three-membered epoxide ring.

The epoxy-modified polysiloxane (D) generally contains at least 70 mol%, based on the total number of moles of repeating units in the polysiloxane (D), of a siloxane repeating unit (Rs) represented by a general formula (3): 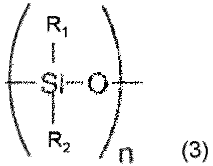 wherein each of R₁, R₂ in formula (3) is independently an C1-C3 alkyl group and/or a phenyl group; and n is an integer from 2 to 100, or from 2 to 70, or from 2 to 60.

The epoxy-modified polysiloxane (D) preferably contains at least 80 mol%, at least 85 mol%, at least 90 mol%, or at least 93 mol% of the repeating unit (Rs) of formula (3), said mol% being based on the total number of moles of repeating units in the polysiloxane (D). Substantially all of the repeating units of the polysiloxane (D) may consist of the same siloxane repeating unit (Rs) represented by the formula (3).

Preferably, each of R₁, R₂ in the formula (3) is independently selected from methyl, ethyl and/or phenyl groups, more preferably independently selected from methyl and phenyl groups.

Particularly, the epoxy-modified polysiloxane (D) contains at least 70 mol%, based on the total number of moles of repeating units in the polysiloxane (D), of a siloxane repeating unit (Rs) represented by any of the following formula (3a), (3b) or (3c) shown below: 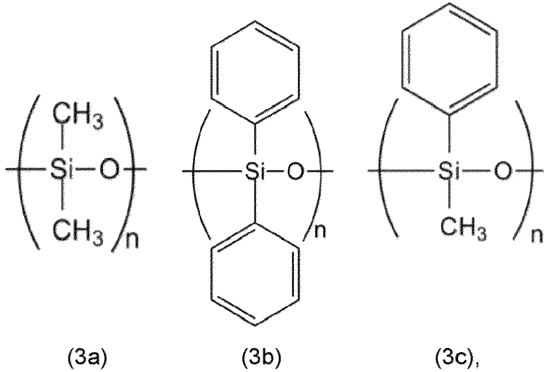 more preferably, contains a siloxane repeating unit (Rs) represented by the formula (3a).

The epoxy-modified polysiloxane (D) preferably contains at least 80 mol%, at least 85 mol%, at least 90 mol%, or at least 93 mol% of the repeating unit (Rs) represented by the formula (3), (3a), (3b) or (3c), said mol% being based on the total number of moles of repeating units in the polysiloxane (D). Substantially all of the repeating units of the polysiloxane (D) may consist of the same siloxane repeating unit (Rs) represented by the formula (3a), (3b) or (3c), preferably unit (Rs) represented by the formula (3a) or (3c), more preferably unit (Rs) represented by the formula (3a).

A particularly suitable epoxy-modified polysiloxane (D) is a poly(dimethylsiloxane) (hereinafter sometimes referred to "PDMS") containing at least 80 mol%, at least 85 mol%, at least 90 mol%, or at least 93 mol% of the siloxane repeating unit (Rs) represented by the formula (3a), said mol% being based on the total number of moles of repeating units in the polysiloxane (D).

When the epoxy-modified polysiloxane (D) is a copolymer containing one or more additional units different from the siloxane repeating unit (Rs), the epoxy-modified polysiloxane (D) preferably contains at most 20 mol%, at most 15 mol%, at most 10 mol%, or at most 7 mol% of other units different from the siloxane repeating unit (Rs), said mol% being based on the total number of moles of units in the polysiloxane (D).

The epoxy-modified polysiloxane (D), preferably the epoxy-modified PDMS, may be a single-end functional silicone polymer, a dual-end functional polysiloxane or a multifunctional epoxy-modified polysiloxane with at least one terminal and/or pendant epoxy functionalization. That is to say, the epoxy-modified polysiloxane (D) may contain one epoxy functional group at only one terminal end, one epoxy functional group on each of the two terminal ends, at least one epoxy functional group on one or more side chains, or any combination thereof.

When the epoxy-modified polysiloxane (D) has one or more pendant epoxy functional groups, the polysiloxane (D) may further contain one or more epoxy-modified siloxane unit (R_{EM}s) represented by general formula **(4)** or **(5):** 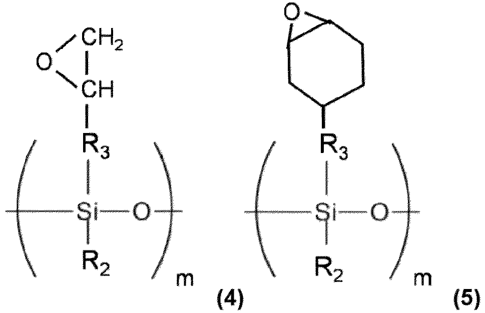 wherein
- R₂ in formulae **(4)** and **(5)** is an C1-C3 alkyl group or a phenyl group;
- R₃ in formulae **(4)** and **(5)** is a linking group represented by formula **(6):**

   -(CH₂)ₖ-O-CH₂- **(6),**

   in which k is an integer from 1 to 10, preferably from 2 to 8, more preferably from 3 to 6, most preferably being 3; and
- m in formulae **(4)** and **(5)** varies from 1 to 10, or from 1 to 7 or from 1 to 6.

In the unit (R_{EM}s) of formula **(4)** or **(5),** R₂ is preferably a methyl or phenyl group, more preferably a methyl group.

In the linking group R₃ represented by the formula **(6),** the first carbon atom of the -(CH₂)ₖ- group is covalently attached to the main-chain Si atom in the unit (R_{EM}s) and the carbon atom in the -O-CH₂- group is covalently attached to the pendant epoxy functional group.

In formulae **(4)** and **(5),** R₃ is preferably represented by formula **(6a):**

-(CH₂)₃-O-CH₂- **(6a)**.

The epoxy-modified polysiloxane (D) may comprise only one epoxy-modified siloxane unit (R_{EM}s) of formula **(4)** or **(5)** in the polymeric chain. Alternatively, the epoxy-modified polysiloxane (D) may comprise two or more epoxy-modified siloxane units (Rεnns) of formula **(4)** or **(5)** which may be consecutive to each other (i.e., forming an epoxy-modified polysiloxane block) or may be randomly placed in the main chain of the epoxy-modified polysiloxane (D). When more than one epoxy-modified siloxane unit (Rεnns) is used, the epoxy-modified siloxane units (R_{EM}s) have the same formula represented by formula **(4)** or **(5).**

When the epoxy-modified polysiloxane (D) is a copolymer containing at least one epoxy-modified siloxane unit (R_{EM}s) and the siloxane repeating units (Rs), the epoxy-modified polysiloxane (D) preferably contains at most 20 mol%, at most 15 mol%, at most 10 mol%, or at most 7 mol% of the units (R_{EM}s), said mol% being based on the total number of moles of units (Rεnns) and (Rs) in the polysiloxane (D). Preferably in such embodiment, the epoxy-modified polysiloxane (D) copolymer consists only of units (Rεnns) and (Rs).

When the epoxy-modified polysiloxane (D) comprises at least one terminal epoxy functional group, preferably two terminal epoxy functional groups, the epoxy-modified polysiloxane (D) may contain one epoxy functional group in only one chain end (terminal) of the polymeric chain (single-end epoxy functionalization) or an epoxy functional group at each of the two chain ends (terminals) of the polymeric chain (dual-end epoxy functionalization).

The one or both terminal epoxy functional groups in the polysiloxane (D) may be represented by at least one of formulae **(7)** and **(8)** as follows: 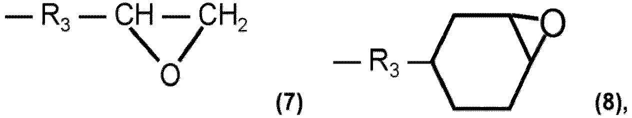 in which R₃ is represented by the formula **(6):** -(CH₂)ₖ-O-CH₂-, wherein k is an integer from 1 to 10, preferably from 2 to 8, more preferably from 3 to 6, most preferably being 3.

When the epoxy-modified polysiloxane (D) has two terminal epoxy functional groups, both terminal epoxy functional groups have the same formula selected from the formulae **(7)** and **(8)** described herein, preferably have the same formula **(7).**

When the epoxy-modified polysiloxane (D) has only one terminal epoxy functional group, the other terminal group may be represented by -(CH₂)ₖ-O-CH₃ or -(CH₂)ₖ-O-CH₂-CH₃, wherein k is an integer from 1 to 10, preferably from 2 to 8, more preferably from 3 to 6, most preferably being 3.

In such instance, the epoxy-modified polysiloxane (D) may be represented by at least one of the following formula **(9) or (10):** 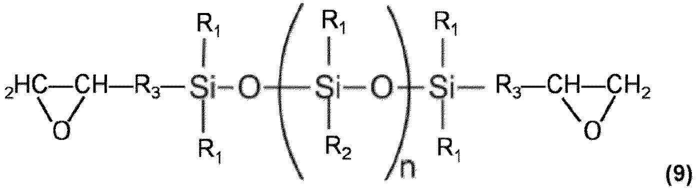 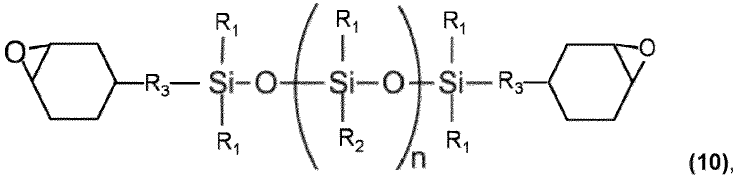 wherein:
- each of R₁, R₂ in formulae (9) and (10) is independently an C1-C3 alkyl group and/or a phenyl group;
- R₃ in formulae (9) and (10) is a linking group represented by the formula **(6):**

   -(CH₂)ₖ-O-CH₂- **(6)**

   in which k is an integer from 1 to 10, preferably from 2 to 8, more preferably from 3 to 6, most preferably being 3; and
- n is an integer from 2 to 100, or from 2 to 70, or from 2 to 60.

In formulae (9) and (10), each of R₁, R₂ is preferably independently selected from methyl, ethyl and/or phenyl groups, more preferably independently selected from methyl and phenyl groups.

In formulae (9) and (10), R₃ is preferably represented by formula **(6a):**

-(CH₂)₃-O-CH₂- **(6a)**.

In particular suitable embodiments, the epoxy-modified polysiloxane (D) is a poly(dimethylsiloxane) (PDMS) having one or more pendant and/or terminal epoxy functional groups represented by at least one of formulae **(7)** and **(8).**

In particular suitable embodiments, the epoxy-modified polysiloxane (D) may be a poly(dimethylsiloxane) or poly(phenylmethylsiloxane) having two terminal epoxy functional groups represented by at least one of formulae **(7)** and **(8)** (dual-end functionalisation).

In more particularly suitable embodiments, the epoxy-modified polysiloxane (D) may be a poly(dimethylsiloxane) "PDMS" having two terminal epoxy functional groups represented by the same formula selected from formulae **(7)** and **(8)** (dual-end functionalisation), such as represented by formula **(11)** or **(12):** 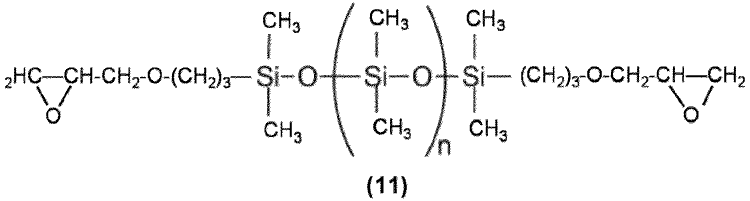 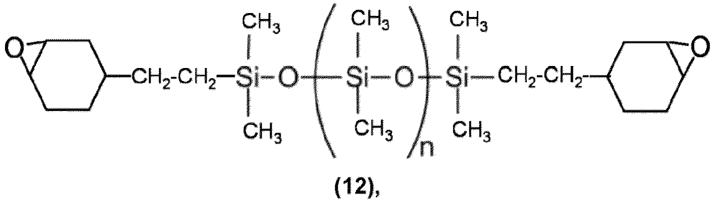 wherein n is an integer from 2 to 100, preferably from 2 to 70, more preferably from 2 to 60.

Particularly advantageous results have been obtained with a dual-end epoxy-modified PDMS represented by the formula **(11).**

In other suitable embodiments, the epoxy-modified polysiloxane (D) may be a poly(dimethylsiloxane) having side-chain epoxy functional groups represented by formula **(13):** 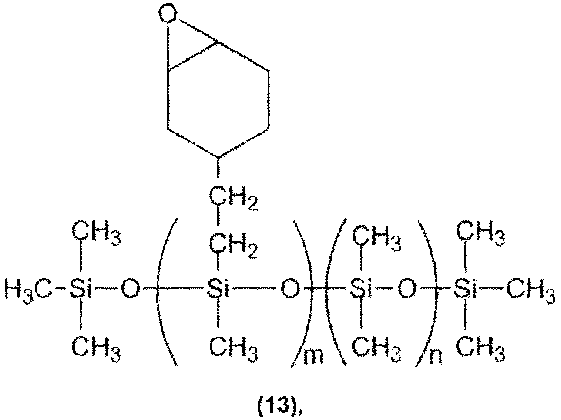 wherein
- n is an integer from 2 to 100, or from 2 to 70, or from 2 to 60; and
- m is such that the ratio of m/(m+n) may be at most 1/3, at most 0.25, at most 0.2, at most 0.15, or at most 0.1, and/or at least 0.01, or at least 0.02.

In formula **(13),** m is preferably such that the ratio of m/(m+n) is from 0.01 to 0.1, or from 0.02 to 0.07.

It should be understood that the epoxy-modified polysiloxane (D) may be a multifunctional epoxy-modified silicone having both terminal and pendant epoxy functionalization. In such instance, the multifunctional epoxy-modified polysiloxane (D) comprises at least one epoxy-modified siloxane unit (R_{EM}s), the siloxane repeating units (Rs) and at least one end group represented by the formulae **(7)** or **(8).**

Commercially available epoxy-modified polysiloxanes suitable for the component (D) are available from Shin-Etsu and Gelest.

Examples of epoxy-modified PDMS represented by the formula **(11)** with dual-end epoxy groups are KF-105 (molecular weight of 490 g/mol; viscosity of 15 cSt); X-22-163A (molecular weight of 1000 g/mol; viscosity of 30 cSt); X-22-163B (molecular weight of 1200 g/mol; viscosity of 60 cSt); X-22-163C (molecular weight of 2700 g/mol; viscosity of 120 cSt) from Shin-Etsu, and DMS-E9 (molecular weight of 363 g/mol; viscosity of 8-11 cSt; 5.5 eq/kg epoxy); DMS-E 11 (molecular weight of 500-600 g/mol; viscosity of 12-18 cSt; 1.9-2.2 eq/kg epoxy); DMS-E9 (molecular weight of 363 g/mol; viscosity of 8-11 cSt, 5.5 eq/kg epoxy); DMS-E12 (molecular weight of 1000-1400 g/mol; viscosity of 20-35 cSt; 1.6-1.9 eq/kg epoxy); DMS-E21(molecular weight of 4500-5000 g/mol; viscosity of 100-140 cSt; 0.35-0.45 eq/kg epoxy) from Gelest.

Examples of epoxy-modified PDMS being dual-end alicyclic epoxy silicones represented by the formula **(12)** are DMS-EC13 from Gelest (molecular weight of 900-1000 g/mol; viscosity of 25-35 cSt; 1.9-2.0 eq/kg epoxy) which is an epoxycyclohexylethyl terminated PDMS .

An example of an epoxy-modified PDMS being a copolymer consisting of dimethylsiloxane repeating unit (Rs) and the epoxy-modified siloxane units (R_{EM}s) represented by the formula **(13)** are ECM-227 available from Gelest which is a [2-3% (epoxycyclohexylethyl)methylsiloxane] - dimethylsiloxane copolymer. Another example of an epoxy dual-end type PDMS having also epoxy side chains is X-22-9002 available from Shin-Etsu (viscosity of 900 cSt).

The epoxy-modified polysiloxane (D) should have a weight-average molecular weight of at least 200 g/mol, at least 300 g/mol, at least 350 g/mol, or at least 400 g/mol, as determined by gel permeation chromatography.

The epoxy-modified polysiloxane (D) should have a molecular weight of at most 5000 g/mol, at most 4800 g/mol, at most 4500 g/mol, at most 4000 g/mol, at most 3000 g/mol, at most 2000 g/mol, at most 1200 g/mol, or at most 1000 g/mol, as determined by gel permeation chromatography.

Preferably the epoxy-modified polysiloxane (D) has a molecular weight of from 200 g/mol to 5000 g/mol, or from 300 g/mol to 4000 g/mol, or from 350 g/mol to 3000 g/mol, as determined by gel permeation chromatography.

The epoxy-modified polysiloxane (D) should have a viscosity of at least 8 cSt, at least 10 cSt, at least 11 cSt, or at least 12 cSt.

The epoxy-modified polysiloxane (D) should have a viscosity of at most 150 cSt, of at most 120 cSt, or at most 100 cSt.

The PPS-based composition of the present invention comprises the at least one epoxy-modified polysiloxane (D) in an amount of at least 0.5 wt%, or of at least 0.6 wt%, for example at least 0.7 wt%, based on the total weight of the PPS-based composition.

The PPS-based composition of the present invention may comprise the at least one epoxy-modified polysiloxane (D) in an amount of 6 wt% or less, for example less than 5 wt%, less than 4.5 wt%, less than 4 wt%, less than 3.5 wt%, less than 3 wt%, less than 2.5 wt%, or less than 2 wt%,based on the total weight of the PPS-based composition.

Preferably, the PPS-based composition of the present invention may comprise the at least one epoxy-modified polysiloxane (D) in an amount ranging from 0.5 to 5 wt%, for example from 0.6 to 4 wt%, from 0.7 to 3 wt%, from 0.8 to 2.5 wt% or from 1 to 2 wt%, based on the total weight of the PPS-based composition.

### Optional Component (E): Additive(s)

The PPS-based composition according to the invention can further comprise at least one additive (E), including but not limited to, antioxidants, light stabilizers, UV stabilizers, heat stabilizers, processing aids, nucleating agents, lubricants, flame retardant agents, smoke-suppressing agents, anti-static agents, anti-blocking agents, mold release agents, and colorants (e.g., pigments, dyes). Preferably, flame retardant agents are omitted from this list.

The optional additive (E) is not a component (C) nor a component (D).

The additive (E) which is different than the components (A), (B), (C) and (D) may be added and blended in the PPS-based composition according to the invention, to the extent that the effects of the present invention are not impaired.

When present, the one or more additives (E) are contained in the PPS-based composition in an amount typically of at most 10 wt%, even at most 8 wt% or at most 5 wt% with respect to the total weight of the PPS-based composition. Additives are generally present in an amount of at least 0.5 wt%, for example at least 0.8 wt%, or at least 1 wt% with respect to the total weight of the PPS-based composition.

One or more colorants such as dyes and/or pigments may be particularly desirable additives (E) in the PPS-based composition so as to provide a white, black or colored article. The pigment may be a black pigment such as carbon black or nigrosine, a white pigment such as zinc oxide, zinc sulfide, lithopone, antimony white and titanium dioxide (of rutile or anatase type, preferably rutile type), and/or a colored pigment. A pigment is generally present in an amount of from 0 to 6 wt%, preferably from 0.05 to 5 wt% and in particular from 0.1 to 3 wt%, based on the total weight of the PPS-based composition.

A colorant additive (E) comprising carbon black powder may be included in the PPS-based composition. A preferred concentration of carbon black in the PPS-based composition may be from 0.05 wt.% to 3 wt.%, or from 0.1 wt.% to 1 wt.%, or from 0.2 wt.% to 0.5 wt.%, based on total weight of the PPS-based composition.

Such carbon black powder may be added to the PPS-based composition in a form of a masterbatch which further includes a polymeric carrier. Such masterbatch is generally called "*carbon black concentrate*". The carbon black concentrate may contain from 5 to 70 wt.%, or from 10 to 40 wt.%, or from 10 to 35 wt.%, of carbon black, based on the total weight of the carbon black concentrate. From 1 pph to 10 pph of the carbon black concentrate may be added to the PPS-based composition, where "pph" means parts per hundred parts by total weight of the PPS-based composition.

A suitable lubricant as additive (E) may be selected from linear low-density polyethylene, calcium or magnesium stearate or sodium montanate, or any combination thereof, preferably calcium or magnesium stearate, more preferably calcium stearate. A preferred concentration of lubricant in the PPS-based composition may be from 0.05 wt.% to 3 wt.%, or from 0.1 wt.% to 1 wt.%, or from 0.2 wt.% to 0.8 wt.%, based on total weight of the PPS-based composition.

One or more antioxidants may be also desirable additives (E) in the PPS-based composition. Antioxidants can improve the heat and light stability of the PPS-based composition. For example, antioxidants that are heat stabilizers can improve the thermal stability of the PPS-based composition during manufacturing (or in high heat application settings), for example, by making the polymer processable at high temperatures while helping to prevent polymer degradation. Desirable antioxidants include, but are not limited to, copper salts (*e.g.,* CuO and Cu₂O), alkaline metal halides *(*e.g., Cul, KI, and KBr, including combinations of alkaline metal halides such as, but not limited to, Cul/KI), hindered phenols, hindered amine light stabilizers ("HALS") (*e.g.,* tertiary amine light stabilizers) and organic or inorganic phosphorous-containing stabilizers (*e.g.* sodium hypophosphite or manganese hypophosphite).

Exemplary mold release agents as additive (E) include, but are not limited to, metal stearate, stearyl stearate, pentaerythritol tetrastearate, beeswax, montan wax, paraffin wax, or the like, or any combination thereof.

Since the PPS-based composition of the present invention comprising the components (A), (B), (C) and (D) is flame-retardant, there is generally no need to further add a flame retardant agent to such a composition.

Nonetheless, when the PPS-based composition contains at least one flame retardant agent as an additive (E), the flame retardant agent may be selected from the group consisting of phosphorus-based flame retardant agents, halogen-based flame retardants agents, inorganic flame retardant agents, and any combination thereof. In such instances, the flame retardant agent added as an additive (E) to the PPS-based composition is preferably a halogen-free flame retardant agent. The halogen free flame retardant agent may be an organophosphorous compound selected from the group consisting of phosphinic salts (phosphinates), diphosphinic salts (diphosphinates) and condensation products thereof.

Phosphorus-based flame retardant agents may be omitted from the flame-retardant PPS-based composition of the present invention.

Halogen-based flame retardant agents may be omitted from the flame-retardant PPS-based composition of the present invention.

Inorganic flame retardant agents may be omitted from the flame-retardant PPS-based composition of the present invention.

More preferably, the additive (E) excludes a flame retardant agent. That is to say, no flame retardant agent is present in the flame-retardant PPS-based composition of the present invention which comprises the components (A)-(D) and any optional components (E)-(F).

### Optional Component (F): other resins

An optional resin (F) which is different than the components (A), (B), (C), (D) and optional (E) may be added and blended in the PPS-based composition according to the invention, to the extent that the effects of the present invention are not impaired.

Specific examples of other resins (F) thereof include polyamide, polyamide elastomer, polybutylene terephthalate, polyethylene terephthalate, polyester elastomer, polyetherimide, polyketone, liquid crystal polymer, polyetherketone, polyetheretherketone, ethylene-tetrafluoroethylene copolymer (ETFE), tetrafluoroethylene-perfluoro(alkyl vinyl ether) copolymer (PFA), tetrafluoroethylene-hexafluoropropylene copolymer (FEP), ethylene-tetrafluoroethylene-hexafluoropropylene copolymer, polyvinylidene fluoride (PVDF ), and polychlorotrifluoroethylene (PCTFE)), but are not limited thereto. The amount of such resin (F) added is preferably less than 15 wt%, preferably less than 10 wt%, more preferably less than 8 wt%, even more preferably less than 6 wt%, yet even more preferably less than 4 wt% or less than 2 wt%, or less than 1 wt%, said wt% being based on the total weight of the PPS-based composition.

In addition, as a lower limit, it is preferable that the PPS-based composition does not contain any resin (F), that is to say, a content of 0 wt% of a resin (F) which is different than the components (A), (B), (C), (D) and optional (E).

The inventive PPS-based composition preferably excludes a poly(ether imide) (PEI) polymer. The expressions "poly(ether imide)" and/or "polyetherimide" denote a polymer comprising at least 50 mol.%, based on the total number of moles in the polymer, of recurring units (R_{PEI}) comprising at least one aromatic ring, at least one imide group, as such and/or in its amic acid form, and at least one ether group. Recurring units (R_{PEI}) may optionally further comprise at least one amide group which is not included in the amic acid form of an imide group.

### Method of making the PPS-based composition

The inventive PPS-based composition according to the invention can be made using methods well known in the art.

For example, the PPS-based composition is made by melt-blending the components (A), (B), (C) and (D) and any optional components (E) and/or (F). Any suitable melt-blending method may be used for combining the components of the inventive composition. For example, all of the components may be fed into a melt mixer, such as single screw extruder or twin screw extruder, agitator, single screw or twin screw kneader, Brabender mixer, or Banbury mixer. The components can be added to the melt mixer all at once or gradually in batches. When said components are gradually added in batches, a part of the components may be first added and then melt-mixed with the remaining part of the components, which are subsequently added, until an adequately mixed PPS-based composition is obtained.

The temperature used for melt-blending may be from 320 to 350°C.

All embodiments described herein in connection with the PPS-based composition of the present invention are applicable here, *mutatis mutandis.*

### Use of an epoxy-modified polysiloxane (D) to improve flame retardation of a V-1 rated PPS-based composition comprising components (A), (B) and (C)

A further aspect of the invention is a method for improving flame retardancy of a V-1 rated PPS-based composition which comprises
- a component (A): at least one polyphenylene sulfide polymer ("PPS"),
- a component (B): at least one polyphenylsulfone polymer ("PPSU"), and
- a component (C): at least one thermoplastic elastomer ("TPE") containing epoxy functional groups,

said method comprising adding, to the V-1 rated PPS-based composition, an amount of a component (D): an epoxy-modified polysiloxane, so as to obtain the V-0 rated PPS-based composition which comprises:
   - (A) from 45 to 75 wt% of the at least one PPS polymer,
   - (B) from 20 to 45 wt% of the at least one PPSU polymer,
   - (C) from 4.5 to 12 wt% of the at least one thermoplastic elastomer containing epoxy functional groups (TPE), and
   - (D) from 0.5 to 5 wt% of the epoxy-modified polysiloxane,
said wt% being based on the total weight of the V-0 rated PPS-based composition,
wherein the combined amounts of components (A), (B), (C) and (D) is 100 wt% or less based on the total weight of the V-0 rated PPS-based composition,
wherein the V-0 and V-1 flame retardancy ratings are measured according to UL 94 V (2013) on a test piece having a thickness of 1.0 mm or less, preferably a thickness of 0.8 mm.

Such a method is applicable to any of the embodiments of the PPS-based composition of the present invention and any of the various embodiments of the components (A)-(D) described herein.

In a particular embodiment, for improving flame retardancy of a V-1 rated PPS-based composition which comprises:
- a component (A): at least one PPS polymer,
- a component (B): at least one PPSU polymer,
- a component (C): at least one thermoplastic elastomer containing epoxy functional groups (TPE),
- optionally a component (E): at least one additive (E), and
- optionally a component (F): another resin (F) different than the components (A), (B), (C), (D) and (E);

the method comprises adding, to the V-1 rated PPS-based composition, an amount of a component (D): at least one epoxy-modified polysiloxane so as to obtain a V-0 rated PPS-based composition which consists of:
   - (A) : from 45 to 75 wt%, or from 47 to 70 wt%, or from 50 to 65 wt%, or from 50 to 65 wt%, of at least one PPS polymer,
   - (B) : from 20 to 45 wt%, or from 22 to 43 wt%, or from 23 to 40 wt%, or from 27 to 38 wt%, of at least one PPSU polymer,
   - (C) : from 4.5 to 12 wt%, or from 5 to 11 wt%, or from 6 to 10 wt%, or from 7 to 10 wt%, of at least one TPE,
   - (D) : from 0.5 to 5 wt%, or from 0.6 to 4 wt%, or from 0.7 to 3 wt%, or from 1 to 2 wt%, of at least one epoxy-modified polysiloxane,
   - optionally up to 10 wt% of at least one additive (E), and
   - optionally less than 15 wt% of at least another resin (F) different than the components (A), (B), (C), (D) and (E),
said wt% being based on the total weight of the V-0 rated PPS-based composition,
wherein the combined content of components (A), (B), (C), (D), (E) and (F) is 100 wt% based on the total weight of the V-0 rated PPS-based composition,
wherein the V-0 and V-1 flame retardancy ratings are measured according to UL 94 V (2013) on a test piece having a thickness of 1.0 mm or less, preferably a thickness of 0.8 mm.

All embodiments described above in connection with the PPS-based composition of the present invention and the various embodiments of the components (A)-(F) are applicable here, *mutatis mutandis.*

**Use of the PPS-based composition to make an article**

Another aspect of the present invention provides the use of the PPS-based composition to manufacture an article.

Such a use is applicable to any of the embodiments of the PPS-based composition of the present invention and to any of the various embodiments of the components (A)-(D) and optional components (E) and (F) described herein.

The PPS-based composition, as above detailed, can be processed by usual melt processing techniques, including notably extrusion molding, injection molding, overmolding and/or compression molding, preferably extrusion molding and/or overmolding, so as to provide a molded article.

The temperature used for molding, preferably extrusion molding, may be from 320 to 340°C.

### Article

The invention further relates to an article, preferably a molded article, comprising, or made from, the PPS-based composition of the present invention.

Any of the embodiments described herein in connection with the PPS-based composition of the present invention and with its various components (A)-(F) are applicable here, *mutatis mutandis.*

Advantageously, the article of the invention has a V-0 rating measured in a test piece having a thickness of 1.0 mm or less, preferably having a thickness of 0.8 mm, according to the UL 94 V (2013) standard test.

The article of the invention may be shaped by extrusion molding, injection molding, overmolding and/or compression molding, preferably by extrusion molding or overmolding.

The molded article of the invention is preferably a flame-retardant extrusion molded article, an overmolded coating, a multi-layered article and/or a thin-walled molded article. A "thin-walled" molded article has a wall thickness of at most 2 mm or less, at most 1.5 mm, or at most 1 mm, and preferably at least 0.8 mm.

The article may be under the form of a substantially bidimensional article, e.g., a part wherein one dimension (thickness or height) is significantly less than the other two characterizing dimensions (width and length), such as films, sheaths and sheets.

Alternatively, the article may be provided as a three-dimensional part, e.g., substantially extending in the three dimensions of space in similar manner, including under the form of parts with complex geometries, e.g., with concave or convex sections, possibly including undercuts, inserts, and the like.

Molded products obtained by extrusion molding include round bars, square bars, sheets, films, tubes, pipes, and the like. More specific uses include electric insulation for water heater motors, air conditioner motors, drive motors; materials, film capacitors, speaker diaphragms, magnetic tapes for recording; printed circuit board materials, printed circuit board peripheral parts, seamless belts, semiconductor packages, semiconductor transport trays, process/release films, protective films, film sensors for automobiles, wire cables insulating tape in lithium-ion batteries, insulating washers in lithium-ion batteries, heat transfer tubes in eV batteries, chemical tubing, automotive fuel tubing, urban air mobility hot water tubing" cooling water tubing, chemicals, fuel tubing, hot water piping, chemical pipes for chemical plants, pipes for ultrapure water and ultrapure solvents, automobile pipes, pipes for CFCs and supercritical carbon dioxide refrigerants, workpiece holding rings for polishing equipment, and the like. In addition, busbars, busbar holders, wire harnesses and controls such as hybrid vehicles, electric vehicles, fuel cell vehicles, railroads, coated moldings for motor coil windings for power generation equipment, bobbins, slot liners and slot wedges for electric motors or generators, heat-resistant electric wires and cables for home appliances, flat cables used for wiring in automobiles, etc. Wires, coated wires / cables such as magnet wires, signal transformers for communication, transmission, high frequency, audio, measurement, etc., and coated moldings of windings of vehicle-mounted transformers can be exemplified.

Applications of molded products obtained by injection molding include generators, electric motors, transformers, current transformers, voltage regulators, rectifiers, inverters, relays, power contacts, switches, circuit breakers, knife switches, and other poles. Electric equipment parts such as rods, electric parts cabinets, sensors, LED lamps, connectors, sockets, resistors, relay cases, small switches, bobbins such as coil bobbins, capacitors, variable condenser cases, optical pickups, oscillators, various terminal boards, transformers, plugs , printed circuit boards, tuners, speakers, microphones, headphones, small motors, magnetic head bases, power modules, semiconductors, liquid crystals, FDD carriages, FDD chassis, motor brush holders, parabolic antennas, computer-related parts, etc.; VTR parts, TV parts, irons, hair dryers, rice cooker parts, microwave oven parts, audio parts, audio equipment parts such as audio equipment, laser discs (registered trademark) and compact discs, lighting parts, refrigerator parts, air conditioner parts, typewriters Household/office electrical product parts represented by parts, word processor parts, etc. Representatives are office computer related parts, telephone related parts, facsimile related parts, copier related parts, cleaning jigs, motor parts, writers, typewriters, etc. Machinery related parts: Microscopes, binoculars, cameras, clocks and other optical equipment and precision machinery related parts; alternator terminals, alternator connectors, IC regulators, potentiometer bases for light dimmers, exhaust gas valves Fuel-related, exhaust system, intake system various pipes and ducts, turbo duct, air intake nozzle snorkel, intake manifold, fuel pump, engine cooling water joint, carburetor main body, carburetor spacer, exhaust gas sensor, cooling water sensor, oil temperature sensor, brake pad wear sensor, throttle position sensor, crankshaft position sensor, air flow meter, brake pad wear sensor, thermostat base for air conditioner, heating warm air flow control valve, brush holder for radiator motor, water pump impeller, turbine vane, wiper Motor-related parts, distributors, starter switches, starter relays, wire harnesses for transmissions, window washer nozzle, air conditioner panel switch board, fuel-related electromagnetic valve coil, fuse connector, horn terminal, electrical component insulation plate, step motor rotor, lamp socket, lamp reflector, lamp housing, brake piston, solenoid bobbin, engine oil filter, crash pads, insulation locks, ignition device cases and other automotive and vehicle related parts, mobile phones, smartphones, notebook computers, tablet computers, video cameras, hybrid vehicles, gaskets for secondary batteries, etc. can be exemplified.

Preferred molded products include, but are not limited to, tubular members such as heat transfer tubes for eV batteries, busbars such as electrical busbars, bobbins such as coil bobbins, slot liners, slot wedges, coated wire or cable such as magnet wires, and/or power modules.

A slot liner is a component in an electrical machine such as an electric motor or generator which provides an electrical insulation barrier between electrical windings and a stator. This component is cut and shaped from a film to fit within the slots of the motor or generator.

A slot wedge is a slot closure to hold the stator windings in the slots.

A bobbin may be a support for coils or electrical windings.

For coated wires or cables, the PPS-based composition can be utilized to form a coating around an electrically-conductive wire or cable for protection and encasement purposes. The PPS-based composition may be extruded by use of a sheathing machine around an electrically-conductive wire or cable to form the protecting coating on the external surface of the wire/cable. For example, a magnet wire which may be used in an electric motor is generally an electrically-conductive wire (preferably made of copper) which is coated by a polymeric sheath. Such a polymeric coating can be made from the flame-retardant PPS-based composition.

An electrical busbar is generally used for electrical motors and eV power electronics. It preferably comprises a metal bar overmolded with a thermoplastic which provides electrical insulation and scratch resistance. In such instance, the metal bar is overmolded with the flame-retardant PPS-based composition to form the busbar.

A power module provides the physical containment for several power components. Such a physical containment can be made from the flame-retardant PPS-based composition. Power modules are used for power conversion equipment such as industrial motor drives, embedded motor drives, uninterruptible power supplies, AC-DC power supplies and in welder power supplies.

In particular, since the PPS-based composition of the present invention achieves excellent V-0 flame retardancy rating and also exhibits good mechanical properties such as elongation at break, it is suitable for making tubular members having a hollow shape.

Tubular members that may be utilized for carrying liquids or gases, and in one particular embodiment carrying a cooling fluid, may be formed from the PPS-based composition. For instance tubular members including tubes, hoses, pipes, conduits and the like can be formed from the PPS-based composition. In one embodiment, for instance, the PPS-based composition can be utilized in forming an extruded hollow member.

Hence, the article of the invention may be a tube or pipe which comprises or consists of the PPS-based composition as above detailed. Such tube is preferably a heat transfer tube.

Advantageously, the tube, preferably the heat transfer tube, of the invention has a V-0 rating as determined according to the UL 94 V (2013) Standard when measured on a test piece having 0.8 mm in thickness.

The tubular member, preferably the heat transfer tube, of the invention may be manufactured using any suitable method known in the art. The tube, preferably the heat transfer tube, of the invention is typically manufactured by extrusion. Suitably the entire length of tube is extrudable and/or extruded in a single extrusion process.

The tubular member, preferably the heat transfer tube, of the invention suitably has a substantially constant cross-section along its entire extent. Said tubular member (heat transfer tube) preferably has a circular cross-section.

The tubular member, preferably the heat transfer tube, of the invention is hollow to allow the flow of a fluid therethrough. When the tubular member is a hollow heat transfer tube, the fluid is a heat transfer fluid.

Preferably, the hollow heat transfer tube of the invention preferably has an inner surface layer in direct contact with the heat transfer fluid. This inner surface layer is preferably made from the PPS-based composition as above detailed.

In preferred embodiments, the hollow tubular member, preferably the hollow heat transfer tube, of the invention is made in its entirety from the flame-retardant PPS-based composition as above detailed.

In other embodiments, the tubular member that incorporates the PPS-based composition can be a multi-layered tubular member. A multi-layer tubular member may include two, four, or more distinct layers. A multi-layered tubular member may incorporate the PPS-based composition in one or more layers of the tubular member, such as in an inner layer, in an outer layer, and/or in one or more intermediate layers sandwiched between the inner layer and the outer layer, preferably in an inner layer.

For example, at least the inner layer includes the PPS-based composition that exhibits suitable mechanical properties under a wide temperature range and which is substantially inert to the fluid to be carried within or flowed through the tubular member. In such instance, the outer layer or any optional intermediate layer may include a PPS-based composition that is the same or different than the PPS-based composition in the inner layer.

Alternatively, when at least one layer is made from the PPS-based composition, other layers of the multilayer tubular member may be formed of different materials. For example, in one embodiment an intermediate layer may be formed of a fiber reinforced material such as a fiber-reinforced resin composite. For example, a polymeric woven mat can be utilized to form an intermediate layer that is highly resistant to mechanical assaults.

When a layer is made from the PPS-based composition, the layer thickness may typically be in the range of from 0.7 to 5.0 mm, from 0.8 to 5.0 mm, or even from 1.0 to 5.0 mm. Alternatively, the layer thickness may be in the range of from 0.7 to 2 mm, from 0.8 to 1.5 mm, or even from 0.8 to 1 mm.

Multi-layer tubular members may be made by conventional processes, such as, for example, co-extrusion, dry lamination, sandwich lamination, co-extrusion coating, preferably co-extrusion or co-extrusion coating. By way of example, in forming a two-layered tubular member, the PPS-based composition and a distinct polymeric composition can be separately fed into two different extruders. The separate extrusion melts from those two extruders can then be introduced into one die under pressure. While producing two different tubular melt flows, those melt flows can be combined in the die in such a manner that the melt flow of the PPS-based composition forms the inner layer and that of the distinct polymeric composition forms the outer layer, and the thus-combined melt flows are co-extruded out of the die to produce a two-layered tubular member.

Of course, any known tube-forming methods including blow molding methods can be employable. For instance, in one embodiment, one or more layers of the multi-layered tubular member can be formed from a continuous tape, e.g., a fiber reinforced tape or ribbon formed according to a pultrusion formation method. A tape can be wrapped to form the tubular member or a layer of a multi-layered tubular member according to known practices as are generally known in the art.

When the tubular member is a heat transfer tube employed in a thermal management system, the dimensions of the tube are not limited and they are set by the dimensions of the thermal management system.

The tubular member of the invention, preferably the heat transfer tube, may have a diameter in the range of 5 to 50 mm, even 5 to 30 mm. Wall thickness for the tubular member, preferably the heat transfer tube, may typically be in the range of from 0.7 to 5.0 mm, from 0.8 to 5.0 mm, or even 1.0 to 5.0 mm. Alternatively, wall thickness for the tubular member, preferably the heat transfer tube, may typically be in the range of from 0.8 to 2 mm, of from 0.8 to 1.5 mm, or even from 0.8 to 1 mm. The tubular member of the invention, preferably the heat transfer tube, may have a length of from 10 cm to a few meters, such as up to 2 m.

### Use of the article

Another aspect of the invention is a thermal management system comprising a heat transfer tube according to the invention. The thermal management system additionally comprises a heat transfer fluid. The heat transfer fluid is contained in the heat transfer tube. The heat transfer fluid preferably passes (flows) inside the heat transfer tube. The heat transfer fluid may be selected from the group consisting of water, water/ethylene glycol mixtures, chlorofluorocarbons (CFCs), hydrochlorofluorocarbons (HFCs) and (per)fluorinated polyethers (PFPEs). In a preferred embodiment of the invention, the heat transfer fluid is selected from the group consisting of water or water/ethylene glycol mixtures. In certain embodiments, the heat transfer fluid may be selected from the group consisting of chlorofluorocarbons (CFCs), hydrochlorofluorocarbons (HFCs) and (per)fluorinated polyethers (PFPEs). The thermal management system of claim 8 further comprising a heat transfer fluid contained in the heat transfer tube

In an embodiment of the invention, the thermal management system is a battery thermal management system, hereinafter "BTMS", that is a thermal management system for the control of the temperature in a battery system, preferably in a rechargeable battery system.

The BTMS can be more or less complex, depending on the application, but the BTMS has at least a function to cool the battery when its temperature is too high and a function to heat the battery when its temperature is too low, typically using a heat transfer fluid flowing within the inventive cooling tube which exchanges heat with the battery. Other common features in BTMSs are an insulation system, to reduce the effect of the external environment on the battery temperature, and a ventilation system which helps dissipating hazardous gases which may develop within the battery pack.

Typically the heat transfer fluid is circulated by a pump within a closed system comprising the inventive heat transfer tube which is in thermal contact with the battery and with a second system which has the function of heating and/or cooling the heat transfer fluid to the desired temperature. This second system may comprise any combination of a refrigeration system and a heating system or may combine heating and cooling functions in a heat pump. The circulating heat transfer fluid absorbs heat from or releases heat to the battery and then it is circulated in said second system to bring the heat transfer fluid back to the desired temperature. A more or less sophisticated control system may be present controlling the instant temperature of the heat transfer fluid and the temperature of the battery optimizing the temperature of the heat transfer fluid in each moment.

Another aspect of the invention is thus a method of controlling the temperature in a battery said method comprising the step of circulating a heat transfer fluid within a closed system comprising the inventive heat transfer tube wherein said system is in thermal contact with the battery and with a second system which has the function of heating and/or cooling the fluid to the desired temperature.

An additional aspect of the invention is a method for operating a battery comprising the step of controlling the temperature of the battery as defined above.

The battery comprising the BTMS as detailed above can be used in all applications where rechargeable batteries may be used. Notable, non limiting examples of such applications are for instance urban mobility vehicles, such as cars, ebikes, buses and the like.

The embodiments above are intended to be illustrative and not limiting. Additional embodiments are within the inventive concepts. In addition, although the present invention is described with reference to particular embodiments, those skilled in the art will recognized that changes can be made in form and detail without departing from the spirit and scope of the invention.

### EXAMPLES

The invention will now be described with reference to the following examples, whose purpose is merely illustrative and not intended to limit the scope of the invention. As used in the Examples, "Ex" denotes an example embodiment of the present invention and "CEx" denotes a counter-example.

### Raw Materials

**PPS** polymer: Ryton^{®} QA200N obtained from Solvay Specialty Polymers USA, L.L.C; an acid-washed PPS, having a melt flow rate of 100 g/10 min with 5 kg load at a temperature of 316 °C (ASTM D1238).

**PPSU-1** polymer: Radel^{®} R-5500NT obtained from Solvay Specialty Polymers USA, L.L.C., having a melt flow rate of 12-17 g/10 min with 5 kg load at a temperature of 365 °C (ASTM D1238).

**PPSU-2** polymer: Radel^{®} R-5800NT obtained from Solvay Specialty Polymers USA, L.L.C., having a melt flow rate of 20-28 g/10 min with 5 kg load at a temperature of 365 °C (ASTM D1238).

**TPE:** Igetabond^{®} BF-E which is an elastomer with epoxy functional group commercially available from Sumitomo Chemical, having a melt flow rate of 3 g/10 min (JIS K7210-1, 190°C, 21.2N) and a Tg of -26°C; which is a poly(ethylene-co-glycidylmethacrylate) copolymer comprising structural units derived from 88 wt% ethylene and 12 wt% glycidyl methacrylate.

**KF-105:** an epoxy-modified PDMS commercially available from Shin-Etsu which is a dual-end epoxy polysiloxane represented by the formula **(11),** with a molecular weight of 490 g/mol, wherein n is such that the viscosity at 25°C is 15 cSt.

### General procedure for the preparation of compositions

The PPSU polymer (PPSU-1 or PPSU-2) was first dried at 135°C in an oven at least for 5 hours.

A dry blend was then realized by mixing the polymeric components (A) to (D): PPS, PPSU, TPE and PDMS in a vibratory shaker for 2-3 minutes to ensure homogeneity. The dry blend was then placed in a gravimetric feeder and fed into a twin screw extruder (Clextral D32), melted, and extruded. Temperature during extrusion of the PPS-based compositions ranged from 320°C to 350°C.

The melt stream was cooled and fed into a pelletizer.

The pellets were collected and kept in sealed plastic buckets until used for injection molding.

### TESTING

The following test method was employed in evaluating the flame retardancy of the PPS-based compositions

UL 94 V (2013): Flame retardation was evaluated according to standard "UL 94 V" Vertical Burn Test procedure of the *"Test for Flammability of Plastic Materials for Parts in Devices and Appliances",* 6th Edition, March 28, 2013, of Underwriters Laboratory (USA) on specimens having a thickness of 0.8 mm.

The ignition source employed was a test flame with an output of 50 watts to which the test specimens were briefly exposed twice. In this process, the burning time and the dripping of burning particles were evaluated by means of a cotton indicator placed under the test specimen.

For a V-2 rating, the burning stops within 30 seconds on a vertical specimen, and drips of flaming particles are allowed.

For a V-1 rating, the burning stops within 30 seconds on a vertical specimen and drips of particles allowed as long as they are not inflamed.

For a V-0 rating, the burning stops within 10 seconds on a vertical specimen; drips of particles allowed as long as they are not inflamed.

The test criteria for UL 94 V (2013) (Vertical Burning Test, flame: 50W) are summarized in **Table 1.**

**Table 1**

| **Flammability rating UL 94 V (2013)** | | | |
|---|---|---|---|
| **Test Criteria** | **V-0** | **V-1** | **V-2** |
| T1 Burning (atferflame) time of each individual test specimen (after first and second flame applications) | ≤10s | ≤30s | ≤30s |
| T2+T3 (afterflame plus afterglow) total burning time (10 flame applications) | ≤50s | ≤250s | ≤250s |
| T1+T3 Burning and afterglow times after second flame application | ≤30s | ≤60s | ≤60s |
| Cotton indicator ignited by flaming drops | no | no | yes |
| Combustion (afterflame or afterglow) up to holding clamp (specimens completely burned) | no | no | no |

Several compositions are as detailed in **Table 2** where all percentages are by weight, calculated with respect to the total weight of the PPS-based compositions.

**Table 2**

| Compositions | CE1 | E2 | CE3 | E4 |
|---|---|---|---|---|
| PPS | 57% | 55.5% | 57% | 55.5% |
| PPSU-1 | 33% | 33% | - | - |
| PPSU-2 | - | - | 33% | 33% |
| TPE | 10% | 10% | 10% | 10% |
| KF-105 | - | 1.5% | | 1.5% |

Thin-small parts (0.8 mm) were fabricated by injection molding on a Billion Injection at a temperature ranging from 320 to 340°C for compositions CE1, E2, CE3, and E4.

Results for flame retardation evaluated according to UL 94 V (2013) on 5 specimen of thin-wall parts for each composition CE1, E2, CE3, and E4 are summarized in **Table 3** below.

**Table 3**

| Compositions | CE1 | E2 | CE3 | E4 |
|---|---|---|---|---|
| Thickness (mm) | 0.8 | 0.8 | 0.8 | 0.8 |
| Longest T1 (s) | 9 | 5 | 11.8 | 6.2 |
| Longest T2 (s) | 8 | 6 | 6 | 3.7 |
| T1 + T2 for all 5 Specimens (s) | 51 | 35 | 46.5 | 20.7 |
| Afterglow + T2 (s) | 22 | 19 | | |
| Burn To Clamp | 0 | 0 | | |
| Ignited Cotton | 0 | 0 | | |
| Rating | V-1 | V-0 | V-1 | V-0 |

In contrast with the reference compositions CE1 and CE3 comprising PPS, PPSU and TPE (without the epoxy-modified PDMS: KF-105) which exhibited a V-1 rating, the inventive compositions E2 and E4 (with the epoxy-modified PDMS: KF-105) unexpectedly led to materials which met the V-0 rating according to UL 94 V (2013) flammability standard measured on thin specimen of thickness of 0.8 mm.

In addition to the improved flame resistance, it was observed that the addition of the epoxy-modified PDMS (KF-105) in the PPS-based compositions E2 and E4 did not negatively impact the deformation at break compared to what was obtained with the reference compositions CE1 and CE3 (without KF-105).

### Tube extrusion

Tubes may be prepared using the PPS-based compositions of Example E2 and E4 in Table 2 as follows: the PPS-based composition is dried for 4 hours at 90°C before charging it into an extruder. The barrel extruder temperature is set between 320-340°C.

Tubes are extruded using a calibration bath. The resulting tubes should have good surface appearance and regular shape. The tubes preferably have an 16-mm outer diameter, a wall thickness of from 5 mm to 0.8 mm, and an overall length of from 10 cm to a few meters, such as up to 1 to 2 meters.

The disclosure of all patent applications, and publications cited herein are hereby incorporated by reference, to the extent that they provide exemplary, procedural or other details supplementary to those set forth herein. Should the disclosure of any patents, patent applications, and publications which are incorporated herein by reference conflict with the description of the present application to the extent that it may render a term unclear, the present description shall take precedence. Any incorporation by reference of documents is limited such that no subject matter is incorporated that is contrary to the explicit disclosure herein.

While preferred embodiments of this invention have been shown and described, modifications thereof can be made by one skilled in the art without departing from the teaching of this invention. The embodiments described herein are exemplary only and are not limiting. Accordingly, the scope of protection is not limited by the description set out above, but is only limited by the claims which follow, that scope including all equivalents of the subject matter of the claims. Each and every claim is incorporated into the specification as an embodiment of the present invention.

## Claims

1. A flame-retardant PPS-based composition comprising:
- (A) 45 to 75 wt% of at least one polyphenylene sulfide polymer (hereinafter "PPS polymer"),
- (B) 20 to 45 wt% of at least one polyphenylsulfone polymer (hereinafter "PPSU polymer"),
- (C) from 4.5 to 12 wt% of at least one thermoplastic elastomer containing epoxy functional groups (hereinafter "TPE"),
- (D) from 0.5 to 5 wt% of an epoxy-modified polysiloxane,
said wt% being based on the total weight of said PPS-based composition, wherein the combined amounts of components (A), (B), (C) and (D) is 100 wt% or less based on the total weight of said PPS-based composition.

2. The flame-retardant PPS-based composition of claim 1, wherein the PPS-based composition comprises the at least one PPS polymer in an amount of:
- at least 47 wt%, or at least 50 wt%, and
- at most 70 wt%, at most 65 wt%, or at most 60 wt%,
said wt% being based on the total weight of said PPS-based composition.

3. The flame-retardant PPS-based composition of any one of claims 1 to 2, wherein the PPS-based composition comprises from 50 to 65 wt% of the at least one PPS polymer based on the total weight of said PPS-based composition.

4. The flame-retardant PPS-based composition of any one of claims 1 to 3, wherein the PPS polymer comprises at least 70 mol%, at least 80 mol %, at least 90 mol %, at least 95 mol %, or at least 99 mol %, based on the total number of moles of recurring units in the PPS polymer, of recurring units (R_{PPS}) represented by formula (1'):

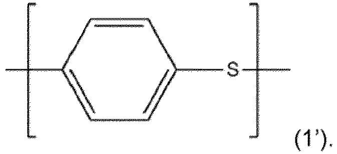

5. The flame-retardant PPS-based composition of any one of claims 1 to 4, wherein the PPS-based composition comprises the at least one PPSU polymer in an amount of:
- at least 22 wt%, at least 25 wt%, at least 27 wt%, or at least 29 wt% and
- at most 43 wt%, at most 40 wt%, or at most 38 wt%,
said wt% being based on the total weight of said PPS-based composition.

6. The flame-retardant PPS-based composition of any one of claims 1 to 5, wherein the PPSU polymer comprises at least 70 mol%, at least 80 mol%, at least 90 mol%, at least 95 mol%, or at least 99 mol%, based on the total number of moles of recurring units in the PPSU polymer, of recurring units (R_{PPSU}) of formula (2):

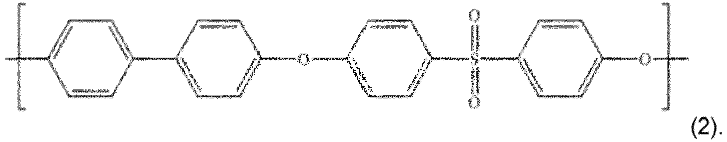

7. The flame-retardant PPS-based composition of any one of claims 1 to 6, wherein the PPS-based composition comprises the at least one TPE in an amount of :
- at least 4.5 wt%, at least 5 wt%, at least 6 wt%, at least 7 wt%, or at least 8 wt% and
- at most 11 wt%, at most 10.5 wt%, at most 10 wt%,
said wt% being relative to the total weight of said PPS-based composition.

8. The flame-retardant PPS-based composition of any one of claims 1 to 7, wherein the TPE is selected from the group consisting of poly(ethylene-co-glycidylmethacrylate) copolymers, poly(ethylene-co-methyl(meth)acrylate-co-glycidyl acrylate) copolymers, poly(ethylene-co-n-butyl acrylate-co-glycidyl acrylate) copolymers and copolymers of styrene and glycidyl (meth)acrylates, preferably selected from poly(ethylene-co-glycidylmethacrylate) copolymers and/or poly(ethylene-co-methyl(meth)acrylate-co-glycidyl acrylate) copolymers; more preferably selected from poly(ethylene-co-glycidylmethacrylate) copolymers.

9. The flame-retardant PPS-based composition of any one of claims 1 to 8, wherein the epoxy-modified polysiloxane contains at least 70 mol%, at least 80 mol%, at least 85 mol%, at least 90 mol%, or at least 93 mol%, based on the total number of moles of repeating units in the polysiloxane, of a siloxane repeating unit (Rs) represented by any of the following formulae (3a), (3b) or (3c), preferably, a siloxane repeating unit (Rs) represented by formula (3a): 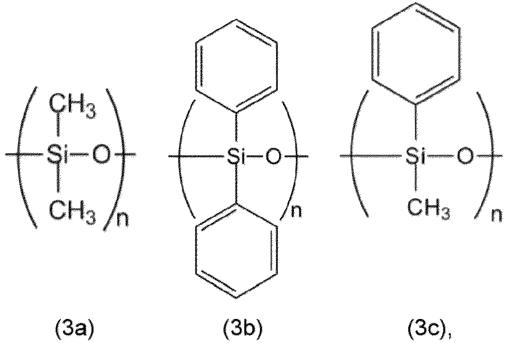 wherein n is an integer from 2 to 100, or from 2 to 70, or from 2 to 60.

10. The flame-retardant PPS-based composition of any one of claims 1 to 9, wherein the epoxy-modified polysiloxane has at least one pendant epoxy functional group, and wherein the epoxy-modified polysiloxane (D) further contains at least one epoxy-modified siloxane unit (R_{EM}s) represented by general formula (4) or (5): 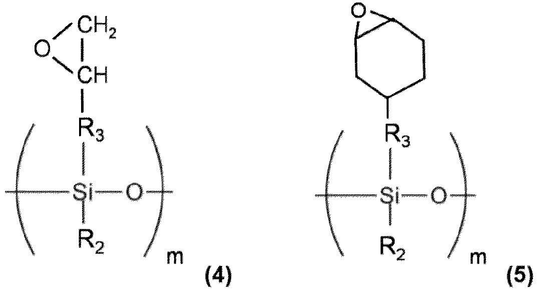 wherein
- R₂ in formulae (4) and (5) is an C1-C3 alkyl group or a phenyl group;
- R₃ in formulae (4) and (5) is a linking group represented by formula **(6):**
-(CH₂)ₖ-O-CH₂- **(6),**
in which k is an integer from 1 to 10, preferably from 2 to 8, more preferably from 3 to 6, most preferably being 3; and
- m in formulae (4) and (5) is an integer from 1 to 10.

11. The flame-retardant PPS-based composition of any one of claims 1 to 10, wherein the epoxy-modified polysiloxane has at least one terminal epoxy functional group, preferably two terminal epoxy functional groups, and wherein the terminal epoxy functional group in the polysiloxane is represented by one of formulae **(7)** and **(8)** as follows: 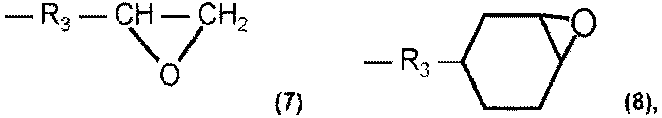
in which R₃ is represented by the formula (6): -(CH₂)ₖ-O-CH₂- **(6),**
wherein k is an integer from 1 to 10, preferably from 2 to 8, more preferably from 3 to 6, most preferably being 3.

12. The flame-retardant PPS-based composition of any one of claims 1 to 11, wherein the epoxy-modified polysiloxane is represented by one of the following formula **(9)** and **(10):** 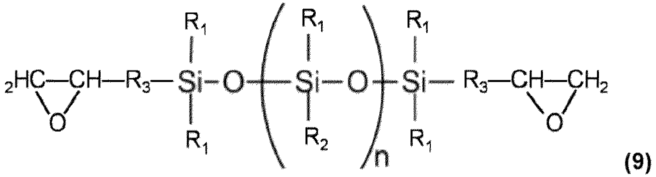 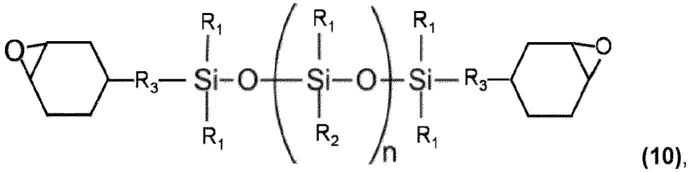 wherein:
- each of R₁, R₂ in formulae **(9) and (10)** is independently a C1-C3 alkyl group and/or a phenyl group;
- R₃ in formulae (9) and (10) is a linking group represented by the formula **(6):**
-(CH₂)ₖ-O-CH₂- **(6)**
in which k is an integer from 1 to 10, preferably from 2 to 8, more preferably from 3 to 6, most preferably being 3; and
- n varies from 2 to 100, or from 2 to 70, or from 2 to 60.

13. The flame-retardant PPS-based composition of claim 12, wherein the epoxy-modified polysiloxane is a poly(dimethylsiloxane) (PDMS) having one or more pendant and/or terminal epoxy functional groups represented by at least one of formulae **(7)** and **(8).**

14. The flame-retardant PPS-based composition of claim 12, wherein the epoxy-modified polysiloxane is a poly(dimethylsiloxane) or poly(phenylmethylsiloxane) having two terminal epoxy functional groups represented by the same formula **(7) or (8).**

15. The flame-retardant PPS-based composition of any one of claims 1 to 14, wherein the epoxy-modified polysiloxane has a molecular weight of
- at least 300 g/mol, at least 350 g/mol, or at least 400 g/mol, and
- at most 5000 g/mol, at most 4000 g/mol, at most 3000 g/mol, at most 2000 g/mol, or at most 1000 g/mol.

16. The flame-retardant PPS-based composition of any one of claims 1 to 15, further comprising in an amount not exceeding 10 wt% of at least one additive (E) being selected from the group consisting of antioxidants, light stabilizers, UV stabilizers, heat stabilizers, processing aids, nucleating agents, lubricants, flame retardant agents, smoke-suppressing agents, anti-static agents, anti-blocking agents, mold release agents, and colorants (e.g., pigments, dyes).

17. The flame-retardant PPS-based composition of any one of claims 1 to 16, wherein no flame retardant agent is present in the flame-retardant PPS-based composition.

18. The flame-retardant PPS-based composition of any one of claims 1 to 17, having a flame retardancy of V-0 measured in a test piece having a thickness of 0.8 mm according to the UL94 standard.

19. A method for improving flame retardancy of a V-1 rated PPS-based composition comprising at least one polyphenylene sulfide polymer ("PPS polymer"), at least one polyphenylsulfone polymer ("PPSU polymer"), and at least one thermoplastic elastomer containing epoxy functional groups ("TPE"),
said method comprising adding to the V-1 rated PPS-based composition an amount of an epoxy-modified polysiloxane (D) so as to obtain a V-0 rated flame-retardant PPS-based composition,
said V-0 rated flame-retardant PPS-based composition comprising:
- A) from 45 to 75 wt% of the at least one PPS polymer,
- B) from 20 to 45 wt% of the at least one PPSU polymer,
- C) from 4.5 to 12 wt% of the at least one TPE,
- D) from 0.5 to 5 wt% of the epoxy-modified polysiloxane,
said wt% being based on the total weight of the V-0 rated flame-retardant PPS-based composition,
wherein the combined amounts of components (A), (B), (C) and (D) is 100 wt% or less based on the total weight of the V-0 rated flame-retardant PPS-based composition,
wherein the V-0 and V-1 flame retardancy ratings are measured according to UL 94 V (2013) on a test piece having a thickness of 1.0 mm or less, preferably a thickness of 0.8 mm.

20. A molded article, comprising, or made from, the PPS-based composition of any one of claims 1-18.

21. The molded article of claim 20, being selected from the group consisting of tubular members such as heat transfer tubes, coated wires or cables such as magnet wires, slot liners, bobbins such as coil bobbins, slot wedges, power modules, and busbars.

22. The molded article of claim 20 or 21, being shaped by extrusion molding.

23. The molded article of any one of claims 20-22, being a tubular member which is hollow to allow flow of a fluid therethrough.

24. The molded article of any one of claims 20-23, being a multi-layer tubular member comprising two or more layers, wherein at least one layer is made from the PPS-based composition of any one of claims 1-18.

25. The molded article of any one of claims 20-24, wherein the tubular member has a substantially constant cross-section along its entire length, preferably a circular cross-section.

26. The molded article of claim 26, wherein the the tubular member has a diameter in the range of 5 to 50 mm and a wall thickness in the range of 0.5 to 5.0 mm.

27. The molded article of any one of claims 20-26, being a heat transfer tube.

28. A thermal management system comprising the tubular member of any one of claims 21 to 27.

29. The thermal management system of claim 28, wherein the tubular member is a heat transfer tube comprising a heat transfer fluid contained herein.

30. The thermal management system of claim 29 wherein the heat transfer fluid is selected from the group consisting of water, water/ethylene glycol mixtures, chlorofluorocarbons (CFCs), hydrochlorofluorocarbons (HFCs) and (per)fluorinated polyethers (PFPEs).

31. An apparatus comprising the thermal management system of any one of claims 28 to 30, wherein the heat transfer fluid in said thermal management system exchanges heat with the apparatus.

32. The apparatus of claim 31 which is a battery, preferably a rechargeable battery.

33. A device comprising the battery of claim 32, which is an electric vehicle.

34. A method for controlling the temperature in a battery, said method comprising a step of circulating a heat transfer fluid within a closed system comprising the tubular member of any one of claims 23 to 27, wherein said system is in thermal contact with the battery and with a second system which has the function of heating and/or cooling the heat transfer fluid to a desired temperature.

35. A method for operating a battery comprising the method of controlling the temperature in the battery of claim 32.
